# EUROPEAN PATENT APPLICATION

(11) **EP 4 319 259 A1**
(43) Date of publication of application: **07.02.2024**
(21) Application number: 21934042.9
(22) Date of filing: 01.04.2021
(51) Int. Cl.: H04W 24/08

(54) **MEASUREMENT GAP PROCESSING METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: HONG, Wei, Beijing 100085 (CN)
(74) Representative: Hughes, Andrea Michelle
(86) International application number: PCT/CN2021/085132
(87) International publication number: WO 2022/205385

(57) **Abstract**

The embodiments of the present disclosure provide a method for measurement gap processing and apparatus, and a communication device and a storage medium. The method for measurement gap processing comprises: receiving capability indication information reported by a UE, wherein the capability indication information at least indicates the configuration of a measurement gap supported by the UE. In this way, according to the embodiments of the present disclosure, a base station can become aware of the configuration of a measurement gap that can be supported by a UE, such that the base station can provide the corresponding configuration of the measurement gap for the UE. Therefore, the UE can work at a suitable measurement gap, so as to improve the configuration effect of the measurement gap and the measurement efficiency of valid configuration, and the base station can configure a measurement gap for the UE more flexibly.

## Description

### FIELD

The present disclosure relates to, but is not limited to, the field of communication technologies, and more particularly to a method for measurement gap processing, an apparatus for measurement gap processing, a communication device, and a storage medium.

### BACKGROUND

In a current new radio (NR) system, merely one measurement gap may be configured in a same frequency range (FR), or merely one measurement gap may be configured for a mobility measurement in a FR1 and a FR2, according to a user equipment (UE) capability. In a process of the mobility measurement, configuring one measurement gap to measure multiple reference signals results in a process of measurement delay and may affect the flexibility of a network configuration.

### SUMMARY

Embodiments of the present disclosure disclose a method for measurement gap processing, an apparatus for measurement gap processing, a communication device, and a storage medium.

According to a first aspect of an embodiment of the present disclosure, there is provided a method for measurement gap processing. The method is performed by a base station. The method includes receiving capability indication information reported by a user equipment (UE), in which the capability indication information at least indicates a configuration of a measurement gap supported by the UE.

According to a second aspect of an embodiment of the present disclosure, there is provided a method for measurement gap processing. The method is performed by a user equipment (UE). The method includes reporting capability indication information of the UE to a base station, in which the capability indication information is configured to indicate a configuration of a measurement gap supported by the UE.

According to a third aspect of an embodiment of the present disclosure, there is provided an apparatus for measurement gap processing. The apparatus is applied to a base station. The apparatus includes a first receiving module configured to receive capability indication information reported by a user equipment (UE), in which the capability indication information at least indicates a configuration of a measurement gap supported by the UE.

According to a fourth aspect of an embodiment of the present disclosure, there is provided an apparatus for measurement gap processing. The apparatus is applied to a user equipment (UE). The apparatus includes a second sending module configured to report capability indication information of the UE to a base station, in which the capability indication information is configured to indicate a configuration of a measurement gap supported by the UE.

According to a fifth aspect of an embodiment of the present disclosure, there is provided a communication device. The communication device includes a processor, and a memory for storing instructions executable by the processor, in which the processor is configured to implement the method for measurement gap processing of any embodiment of the present disclosure when running the executable instructions.

According to a sixth aspect of an embodiment of the present disclosure, there is provided a computer storage medium. The computer storage medium has stored therein computer executable programs that, when executed by a processor, cause the method for measurement gap processing of any embodiment of the present disclosure to be implemented.

Technical solutions provided in the embodiments of the present disclosure may include the following beneficial effects.

In the embodiment of the present disclosure, the capability indication information reported by the UE may be received by the base station, in which the capability indication information is configured to indicate the configuration of the measurement gap supported by the UE. In this way, in the embodiments of the present disclosure, the base station may be made aware of the configuration of the measurement gap that may be supported by the UE, thus enabling the base station to configure a corresponding configuration of the measurement gap for the UE. Therefore, the UE may work at an appropriate measurement gap, so as to improve the configuration effect of the measurement gap and the measurement efficiency of an efficient configuration. In addition, in the embodiments of the present disclosure, the corresponding measurement gap may also be configured according to the measurement gap supported by the UE, thus improving the flexibility of the base station to configure the measurement gap for the UE.

It is to be understood that both the foregoing general description and the following detailed description are illustratively and explanatory only and are not restrictive of the embodiments of the present disclosure.

### BRIEF DESCRIPTION OF THE DRAWINGS

FIG. 1 is a schematic diagram showing a wireless communication system.
FIG. 2 is a flow chart showing a method for measurement gap processing according to an illustrative embodiment.
FIG. 3 is a flow chart showing a method for measurement gap processing according to an illustrative embodiment.
FIG. 4 is a flow chart showing a method for measurement gap processing according to an illustrative embodiment.
FIG. 5 is a flow chart showing a method for measurement gap processing according to an illustrative embodiment.
FIG. 6 is a flow chart showing a method for measurement gap processing according to an illustrative embodiment.
FIG. 7 is a block diagram showing an apparatus for measurement gap processing according to an illustrative embodiment.
FIG. 8 is a block diagram showing an apparatus for measurement gap processing according to an illustrative embodiment.
FIG. 9 is a block diagram showing a user equipment (UE) according to an illustrative embodiment.
FIG. 10 is a block diagram showing a base station according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to the disclosure as recited in the appended claims.

Terms used herein in embodiments of the present disclosure are only for the purpose of describing specific embodiments, but should not be construed to limit the present disclosure. As used in the embodiments of the present disclosure and the appended claims, "a/an", and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if' may be construed to mean "when" or "upon" or "in response to determining" depending on the context.

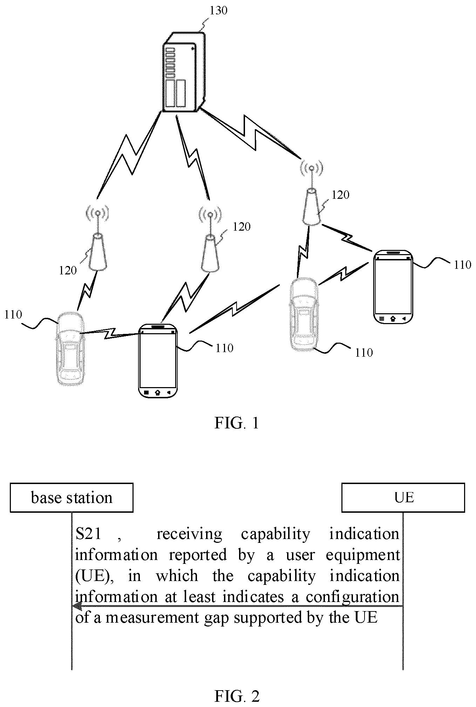

Referring to FIG. 1, which is a schematic diagram showing a wireless communication system provided by an embodiment of the present disclosure. As shown in FIG. 1, the wireless communication system is a communication system based on a cellular mobile communication technology, and may include several user equipment (UE) 110 and several base stations 120.

The UE 110 may be a device that provides voice and/or data connectivity to a user. The UE 110 can communicate with one or more core networks via a radio access network (RAN). The UE 110 can be an Internet of Things user equipment, such as a sensor device, a mobile phone (or referred to as a "cellular" phone) and a computer with an Internet of Things user equipment. For example, it can be a fixed, portable, pocket-sized, handheld, built-in computer or vehicle-mounted apparatus. For example, a station (STA), a subscriber unit, a subscriber station, a mobile station, a mobile, a remote station, an access point, a remote terminal, an access terminal, a user terminal, a user agent, a user device, or a user equipment (UE). Alternatively, the UE 110 may be a device of an unmanned aerial vehicle. Alternatively, the UE 110 may be a vehicle-mounted device, for example, a driving computer with a wireless communication function, or a wireless user equipment externally connected with a driving computer. Alternatively, the UE 110 may be a roadside device, such as a street lamp, a signal lamp or other roadside devices with a wireless communication function.

The base station 120 may be a network side device in the wireless communication system. The wireless communication system can be a 4th generation mobile communication (4G) system, also referred to as a long term evolution (LTE) system. Alternatively, the wireless communication system may be a 5G system, also referred to as a new radio system or a 5G NR system. Alternatively, the wireless communication system may be a next generation system of the 5G system. The access network in the 5G system can be referred to as a new generation-radio access network (NG-RAN).

The base station 120 may be an evolved base station (eNB) used in the 4G system. Alternatively, the base station 120 may be a centralized distributed architecture base station (gNB) used in the 5G system. When the base station 120 adopts the centralized distributed architecture, it usually includes a central unit (CU) and at least two distributed units (DUs). A protocol stack of a packet data convergence protocol (PDCP) layer, a radio link control (RLC) layer and a medium access control (MAC) layer is provided in the central unit. A protocol stack of a physical (PHY) layer is provided in the distributed unit. The specific implementation of the base station 120 is not limited in the embodiments of the present disclosure.

A wireless connection can be established between the base station 120 and the UE 110 through a wireless radio. In different embodiments, the wireless radio is a wireless radio based on the 4th generation mobile communication network technology (4G) standard. Alternatively, the wireless radio is a wireless radio based on the 5th generation mobile communication network technology (5G) standard. For example, the wireless radio is a new radio. Alternatively, the wireless radio can also be a wireless radio based on the next generation mobile communication network technology standard of the 5G.

In some embodiments, an end to end (E2E) connection may also be established between the UE 110, for example, a vehicle to vehicle (V2V) communication, a vehicle to infrastructure (V2I) communication and a vehicle to pedestrian (V2P) communication in a vehicle to everything (V2X) communication.

In some embodiments, the wireless communication system may further include a network management device 130.

Several base stations 120 are connected to the network management device 130, respectively. The network management device 130 may be a core network device in the wireless communication system, for example, the network management device 130 may be a mobility management entity (MME) in an evolved packet core (EPC). Alternatively, the network management device may be other core network devices, such as a serving gateway (SGW), a public data network gateway (PGW), a policy and charging rules function (PCRF) or a home subscriber server (HSS). The implementation form of the network management device 130 is not limited in the embodiment of the present disclosure.

As shown in FIG. 2, an embodiment of the present disclosure provides a method for measurement gap processing. The method is performed by a base station and includes a step as follows.

In step S21, capability indication information reported by a user equipment (UE) is received, in which the capability indication information at least indicates a configuration of a measurement gap supported by the UE.

In an embodiment, the base station may be various types of base stations, for example, a 3G base station, a 4G base station, a 5G base station, or other evolved base stations.

In an embodiment, the UE may be various mobile terminals or fixed terminals. For example, the UE may be, but is not limited to, a mobile phone, a computer, a server, a wearable device, a game control platform, or a multimedia device.

In an embodiment, the capability indication information at least indicates at least one of a number of configurations of the measurement gap indicating a number of configurations of the measurement gap supported by the UE, a type of the configuration of the measurement gap indicating a type of the measurement gap supported by the UE.

Illustratively, the number of configurations of the measurement gap may indicate that the number of configurations of the measurement gap is supported by the UE is one or multiple. In case that the UE supports multiple measurement gaps, it may be multiple measurement gaps of a same type of the measurement gap, or may be multiple measurement gaps of different types of the measurement gaps.

An embodiment of the present disclosure provides a method for measurement gap processing. The method is performed by the base station and may include receiving the capability indication information reported by the UE, in which the capability indication information is at least configured to indicate the number of configurations of the measurement gap supported by the UE.

An embodiment of the present disclosure provides a method for measurement gap processing. The method is performed by the base station and may include receiving the capability indication information reported by the UE, in which the capability indication information is at least configured to indicate that the UE supports the type of the measurement gap.

In an embodiment, the type of the configuration of the measurement gap includes at least one of the measurement gap supported by the UE being a network control small gap (NCSG) measurement gap, the measurement gap supported by the UE being a pre-configured measurement gap, the measurement gap supported by the UE being a concurrent measurement gap.

An embodiment of the present disclosure provides a method for measurement gap processing. The method is performed by the base station and may include receiving the capability indication information reported by the UE, in which the capability indication information is at least configured to indicate that the UE supports the NCSG measurement gap.

An embodiment of the present disclosure provides a method for measurement gap processing. The method is performed by the base station and may include that the base station receives capability indication information reported by the UE, in which the capability indication information is at least configured to indicate that the UE supports the pre-configured measurement gap

An embodiment of the present disclosure provides a method for measurement gap processing. The method is performed by the base station and may include that the base station receives capability indication information reported by the UE, in which the capability indication information is at least configured to indicate that the UE supports the concurrent measurement gaps.

In this way, in the embodiment of the present disclosure, the capability indication information indicating the type of the measurement gap supported by the UE may be received by the base station, so that the base station may know the type of the measurement gap supported by the UE, and then an appropriate type of the measurement gap may be configured for the UE, which is beneficial to improve the flexibility of configuring the measurement gap for the UE.

Of course, in other embodiments, the base station may also receive the capability indication information reported by the UE, in which the capability indication information is configured to indicate at least one of the following: the UE does not support the NCSG measurement gap, the UE does not support the pre-configured measurement gap, and the UE does not support the concurrent measurement gaps. In this way, in the embodiment of the present disclosure, a type of the measurement gap that is not supported by the UE may also be reported through the capability indication information, so that the base station knows which type of the measurement gap is not supported by the UE, which is beneficial to reduce a type of an inappropriate measurement gap configured for the UE. In this way, the probability that the UE cannot efficiently and accurately measure a reference signal or cannot measure a reference signal based on a configuration of the type of the inappropriate measurement gap may be reduced.

The capability indication information reported by the UE may be received by the base station, in which the capability indication information is configured to indicate the configuration of the measurement gap supported by the UE. In this way, in the embodiments of the present disclosure, the base station may be made aware of the configuration of the measurement gap that may be supported by the UE, thus enabling the base station to configure a corresponding configuration of the measurement gap for the UE, so that the UE may work at an appropriate measurement gap, so as to improve the configuration effect of the measurement gap and the measurement efficiency of an effective configuration. In addition, in the embodiments of the present disclosure, the corresponding measurement gap may also be configured according to the measurement gap supported by the UE, thus improving the flexibility of the base station to configure the measurement gap for the UE.

In an embodiment, the number of configurations of the measurement gap includes one of a number of configurations of the measurement gap supported by the UE in one frequency range, a number of configurations of the measurement gap supported by the UE in multiple frequency ranges.

An embodiment of the present disclosure provides a method for measurement gap processing. The method is performed by the base station and may include receiving the capability indication information reported by the UE, in which the capability indication information is at least configured to indicate a configuration where one measurement gap is supported in one frequency range (FR). For example, the capability indication information is configured to indicate a configuration where one measurement gap is supported in a FR1.

An embodiment of the present disclosure provides a method for measurement gap processing. The method is performed by the base station and may include receiving the capability indication information reported by the UE, in which the capability indication information is at least configured to indicate a configuration where at least two measurement gaps are supported in one frequency range. For example, the capability indication information is configured to indicate a configuration where two measurement gaps are supported in a FR1.

Illustratively, the measurement gap indication information may indicate that the at least two measurement gaps are supported in the FR1.

The at least two measurement gaps here are of a same type of the measurement gap. For example, the at least two measurement gaps may both be the NCSG measurement gaps. For another example, the at least two measurement gaps may both be the pre-configured measurement gaps. For another example, the at least two measurement gaps may both be the concurrent measurement gaps. Here, in case that the at least two measurement gaps are of the same type of the measurement gap, periods of the two measurement gaps may be different or the same. For example, in case that the two measurement gaps are both the NCSG measurement gaps, periods of the two NCSG measurement gaps may be different or the same. For another example, in case that the two measurement gaps are both the pre-configured measurement gaps, periods of the two pre-configured measurement gaps may be different or the same.

The at least two measurement gaps here may be of different types of the measurement gaps. For example, the at least two measurement gaps include at least one NCSG measurement gap and at least one pre-configured measurement gap. For another example, the at least two measurement gaps include at least one NCSG measurement gap and at least one concurrent measurement gap. For another example, the at least two measurement gaps include at least one pre-configured measurement gap and at least one concurrent measurement gap. For another example, the at least two measurement gaps include at least one NCSG measurement gap, at least one pre-configured measurement gap, and one concurrent measurement gap.

An embodiment of the present disclosure provides a method for measurement gap processing. The method is performed by the base station and may include that the base station receives capability indication information reported by the UE, in which the capability indication information is at least configured to indicate a configuration where at least two measurement gaps are supported in multiple frequency ranges.

Illustratively, the base station receives the capability indication information reported by the UE, in which the capability indication information is at least configured to indicate a configuration where at least one measurement gap is supported in each frequency range of the multiple frequency ranges. For example, the UE supports measurement in a FR1 and/or a FR2. The capability indication information is configured to indicate a configuration where the UE supports one measurement gap in the FR1 and a configuration where the UE supports one measurement gap in the FR2. For another example, the UE supports measurement in the FR1 and/or FR2. The capability indication information is configured to indicate a configuration where the UE supports two measurement gaps in the FR1 and a configuration where the UE supports three measurement gaps in the FR2.

Illustratively, when the capability indication information is at least configured to indicate a configuration where one measurement gap is supported in each frequency range of the multiple frequency ranges, types of measurement gaps supported in each frequency range may be the same or different. For example, the capability indication information indicates that one measurement gap supported by the UE in the FR1 is a same type as one measurement gap supported by the UE in the FR2. For example, one measurement gap supported in the FR1 and the FR2, respectively, is the NCSG measurement gap, the pre-configured measurement gap, or the concurrent measurement gap

Illustratively, the base station receives the capability indication information reported by the UE, in which the capability indication information is at least configured to indicate a configuration where at least two measurement gaps are supported in at least one frequency range of the multiple frequency ranges. For example, the UE supports measurement in a FR1 and/or a FR2. The capability indication information is configured to indicate a configuration where the UE supports two measurement gaps in the FR1 and a configuration where the UE supports one measurement gap in the FR2. For another example, the UE supports measurement in a FR1 and/or a FR2. The capability indication information is configured to indicate a configuration where the UE supports two measurement gaps in the FR1 and a configuration where the UE supports two measurement gaps in the FR2.

Illustratively, when the capability indication information is at least configured to indicate that the at least two measurement gaps are supported in the at least one frequency range of the multiple frequency ranges, types of the measurement gaps supported in each frequency range may be the same or different, and/or measurement gaps supported in a same frequency range may be different. For example, in case that the capability indication information indicates that the UE supports the two measurement gaps in the FR1 and the three measurement gaps in the FR2, at least one measurement gap in the two measurement gaps supported in the FR1 is a same type as at least one measurement gap in the three measurement gaps supported in the FR2, or the two measurement gaps supported in the FR1 and the three measurement gaps supported in the FR2 are of different types. Moreover, types of the two measurement gaps supported by the FR1 may be the same or different, and/or types of the three measurement gaps supported by the FR1 may be different, or at least two measurement gaps of the three measurement gaps are of the same type.

In the embodiment of the present disclosure, in case that the number of configurations of the measurement gap indicating the number of configurations of the measurement gap supported by the UE is multiple, the multiple measurement gaps may correspond to multiple types of the measurement gaps or one type of the measurement gap. For example, when indicating the number of configurations of the measurement gap supported by the UE is *N,* the *N* measurement gaps correspond to *M* types of the measurement gaps, where *N* represents greater than or equal to *M,* and both N and *M* represent integers greater than 0.

In this way, in the embodiment of the present disclosure, the capability indication information indicating the number of configurations of the measurement gap supported by the UE in one or multiple frequency ranges may be received by the base station, so that the base station is made aware of a number of configurations of a corresponding measurement gap that may be configured by the UE in one or multiple frequency ranges, thus, an number of configurations of an appropriate measurement gap may be performed for the UE and the flexibility of the number of configurations of the measurement gap for the UE may be advantageously improved.

Moreover, in case that the capability indication information is configured to indicate a configuration where two or more measurement gaps are supported in one frequency range, for measurements of different reference signals, it is not necessary to share one measurement gap for a measurement. Multiple corresponding measurement gaps may be configured for different reference signals, so that each reference signal may be measured when it needs to be measured, thus greatly reducing the measurement delay.

In some embodiments, the capability indication information includes, but is not limited to at least one of NCSG measurement gap capability indication information configured to indicate a configuration where the UE supports the NCSG measurement gap, pre-configured measurement gap capability indication information configured to indicate a configuration where the UE supports the pre-configured measurement gap, concurrent measurement gap capability indication information configured to indicate a configuration where the UE supports the concurrent measurement gap.

An embodiment of the present disclosure provides a method for measurement gap processing. The method is performed by the base station and may include receiving the NCSG measurement gap capability indication information reported by the UE, in which the NCSG measurement gap capability indication information is at least configured to indicate the configuration where the UE supports the NCSG measurement gap.

In this way, in the embodiment of the present disclosure, the NCSG measurement gap capability indication information configured to indicate the configuration where the UE supports the NCSG measurement gap may be received by the base station, so that the base station knows that the UE supports the NSCG measurement gap, thus facilitating the base station to configure a corresponding NSCG measurement gap for the UE.

An embodiment of the present disclosure provides a method for measurement gap processing. The method is performed by the base station and may include receiving the pre-configured measurement gap capability indication information reported by the UE, in which the pre-configured measurement gap capability indication information is configured to indicate the configuration where the UE supports the pre-configured measurement gap.

In this way, in the embodiment of the present disclosure, the base station receives the pre-configured measurement gap capability indication information indicating that the UE supports and configures the measurement gap, so that the base station knows that the UE supports the pre-configured measurement gap, thus facilitating the base station to configure the measurement gap for the UE according to different bandwidth parts (BWPs) during mobility measurement. For example, for a UE working at a BWP1, it may be configured to support the measurement gap, and for a UE working at a BWP2, it may be configured not to support the measurement gap. In this way, the base station may dynamically configure the measurement gap for the UE.

An embodiment of the present disclosure provides a method for measurement gap processing. The method is performed by the base station and may include receiving the concurrent measurement gap capability indication information reported by the UE, in which the concurrent measurement gap capability indication information is configured to indicate the configuration where the UE supports the concurrent measurement gap.

In some embodiments, the concurrent measurement gap capability indication information includes, but is not limited to, at least one of a number of configurations configured to indicate the concurrent measurement gap supported by the UE in one frequency range, a number of configurations configured to indicate the concurrent measurement gap supported by the UE in each frequency range of multiple frequency ranges.

An embodiment of the present disclosure provides a method for measurement gap processing. The method is performed by the base station and may include receiving the concurrent measurement gap capability indication information reported by the UE, in which the concurrent measurement gap capability indication information is configured to indicate the number of configurations of the concurrent measurement gap supported by the UE in the one frequency range, and/or the number of configurations of the concurrent measurement gap supported by the UE in the each frequency range of the multiple frequency ranges.

In this way, in the embodiment of the present disclosure, the NCSG measurement gap capability indication information configured to indicate the configuration where the UE supports the NCSG measurement gap may be received by the base station, so that the base station may know the number of configurations configured to indicate the concurrent measurement gap supported by the UE in the one frequency range, or the number of configurations configured to indicate the concurrent measurement gap supported by the UE in the each frequency range of the multiple frequency ranges. Therefore, it is convenient for the base station to configure a corresponding number of measurement gaps for the UE in the one frequency range, or configure a corresponding number of measurement gaps for the each frequency range of the multiple frequency ranges. Thus, the flexible configuration of the number of configurations of the measurement gaps of the UE in different scenarios is realized.

It is to be noted that those skilled in the art may understand that the methods provided in the embodiments of the present disclosure may be executed alone, or may be executed together with some methods in the embodiments of the present disclosure or some methods in related technologies.

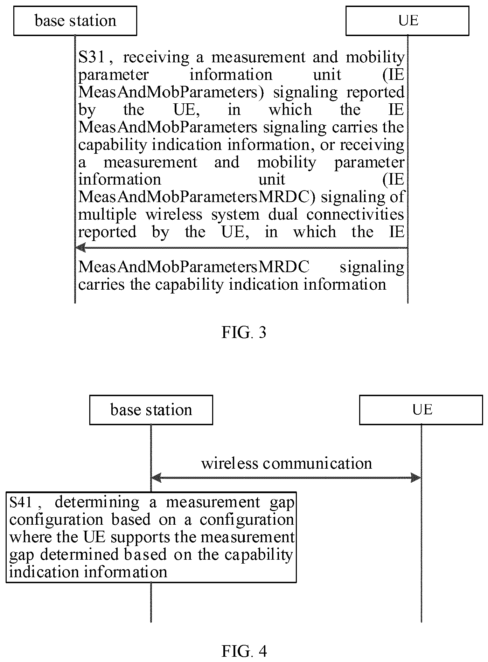

As shown in FIG. 3, an embodiment of the present disclosure provides a method for measurement gap processing. The method is performed by a base station and includes a step as follows.

In step S31, a measurement and mobility parameter information unit (IE MeasAndMobParameters) signaling reported by the UE is received, in which the IE MeasAndMobParameters signaling carries the capability indication information. Alternatively, a measurement and mobility parameter information unit (IE MeasAndMobParametersMRDC) signaling of multiple wireless system dual connectivities reported by the UE is received, in which the IE MeasAndMobParametersMRDC signaling carries the capability indication information.

In some embodiments of the present disclosure, the capability indication information may be the capability indication information described in step S21.

In an embodiment, the above step S21 includes one of receiving the IE MeasAndMobParameters signaling reported by the UE, in which the IE MeasAndMobParameters signaling carries the capability indication information, receiving the IE MeasAndMobParametersMRDC signaling reported by the UE, in which the IE MeasAndMobParametersMRDC signaling carries the capability indication information.

An embodiment of the present disclosure provides a method for measurement gap processing. The method is performed by the base station and may include that the base station receives the IE MeasAndMobParameters signaling reported by the UE, in which the IE MeasAndMobParameters signaling carries the NCSG measurement gap capability indication information.

An embodiment of the present disclosure provides a method for measurement gap processing. The method is performed by the base station and may include receiving the IE MeasAndMobParameters signaling reported by the UE, in which the IE MeasAndMobParameters signaling carries the pre-configured measurement gap capability indication information.

An embodiment of the present disclosure provides a method for measurement gap processing. The method is performed by the base station and may include receiving the IE MeasAndMobParameters signaling reported by the UE, in which the IE MeasAndMobParameters signaling carries the concurrent measurement gap capability indication information.

An embodiment of the present disclosure provides a method for measurement gap processing. The method is performed by the base station and may include receiving the IE MeasAndMobParametersMRDC signaling reported by the UE, in which the IE MeasAndMobParametersMRDC signaling carries the NCSG measurement gap capability indication information.

An embodiment of the present disclosure provides a method for measurement gap processing. The method is performed by the base station and may include receiving the IE MeasAndMobParametersMRDC signaling reported by the UE, in which the IE MeasAndMobParametersMRDC signaling carries the pre-configured measurement gap capability indication information.

An embodiment of the present disclosure provides a method for measurement gap processing. The method is performed by the base station and may include receiving the IE MeasAndMobParametersMRDC signaling reported by the UE, in which the IE MeasAndMobParametersMRDC signaling carries the concurrent measurement gap capability indication information.

In the embodiment of the present disclosure, the IE MeasAndMobParameters signaling or the IE MeasAndMobParametersMRDC signaling carrying the capability indication information reported by the UE may be received. For example, the IE MeasAndMobParameters signaling carrying at least one of the NCSG measurement gap capability indication information, the pre-configured measurement gap capability indication information and the concurrent measurement gap capability indication information reported by UE is received. Alternatively, for another example, the IE MeasAndMobParametersMRDC signaling carrying at least one of the NCSG measurement gap capability indication information, the pre-configured measurement gap capability indication information and the concurrent measurement gap capability indication information reported by the UE is received. Therefore, the base station knows whether the UE supports the type or number of the NCSG measurement gaps, the pre-configured measurement gaps and/or the concurrent measurement gaps. In this way, it is beneficial for the base station to configure an appropriate type or number of the measurement gaps for the UE, so as to improve the flexibility of the configuration of the measurement gap and improve the effectiveness of the UE to perform a measurement based on the measurement gap, etc.

In addition, since the capability indication information may be carried by using the IE MeasAndMobParameters signal or the IE MeasAndMobParametersMRDC signaling, the utilization rate of the IE MeasAndMobParameters signaling or the IE MeasAndMobParametersMRDC signaling may be improved.

It is to be noted that those skilled in the art may understand that the methods provided in the embodiments of the present disclosure may be executed alone, or may be executed together with some methods in the embodiments of the present disclosure or some methods in related technologies.

As shown in FIG. 4, an embodiment of the present disclosure provides a method for measurement gap processing. The method is performed by a base station and includes a step as follows.

In step S41, a measurement gap configuration is determined based on a configuration where the UE supports the measurement gap determined based on the capability indication information.

In some embodiments of the present disclosure, the capability indication information may be the capability indication information described in step S21.

In an embodiment of the present disclosure, the base station may determine the configuration where the UE supports the measurement gap based on the capability indication information, so as to determine a corresponding measurement gap configuration based on the configuration where the UE supports the measurement gap. In this way, the embodiment of the present disclosure may configure an appropriate measurement gap configuration for the UE through the capability indication information received by the base station. On the one hand, the flexibility of the measurement gap configuration is realized. On the other hand, the UE may perform a measurement based on the appropriate measurement gap configuration, thus improving the measurement efficiency and the like.

An embodiment of the present disclosure provides a method for measurement gap processing. The method is performed by the base station and may include determining the measurement gap configuration of the number of configurations of the measurement gap supported by the UE based on a number of configurations where the UE supports the measurement gap determined based on the capability indication information.

Illustratively, in case that the capability indication information received by the base station indicates that the UE supports two measurement gaps in one frequency range, the base station determines the measurement gap configuration where the UE supports the two measurement gaps in the one frequency range.

Illustratively, in case that the capability indication information received by the base station indicates that the UE supports two measurement gaps in a first frequency range and one measurement gap in a second frequency range, the base station determines the measurement gap configuration where the UE supports the two measurement gaps in the first frequency range and the one measurement gap in the second frequency range.

In the embodiment of the present disclosure, the base station may determine the measurement gap configuration of the number of configurations of the measurement gap supported by the UE through the capability indication information. Therefore, the UE may perform the measurement based on the appropriate number of the configurations.

In case that the number of the measurement gap configurations supported by the UE determined by the base station through the capability indication information is multiple, the base station may configure the measurement gap configurations supporting multiple measurement gaps for the UE. In this way, the embodiment of the present disclosure may measure different reference signals without sharing one measurement gap, and may configure multiple corresponding measurement gaps for the measurement of different reference signals, so that the measurement may be performed when there is a reference signal to be measured, thus shortening the measurement delay.

An embodiment of the present disclosure provides a method for measurement gap processing. The method is performed by the base station and may include determining the measurement gap configuration of the type of the measurement gap supported by the UE based on the type of the UE supporting the measurement gap determined based on the capability indication information.

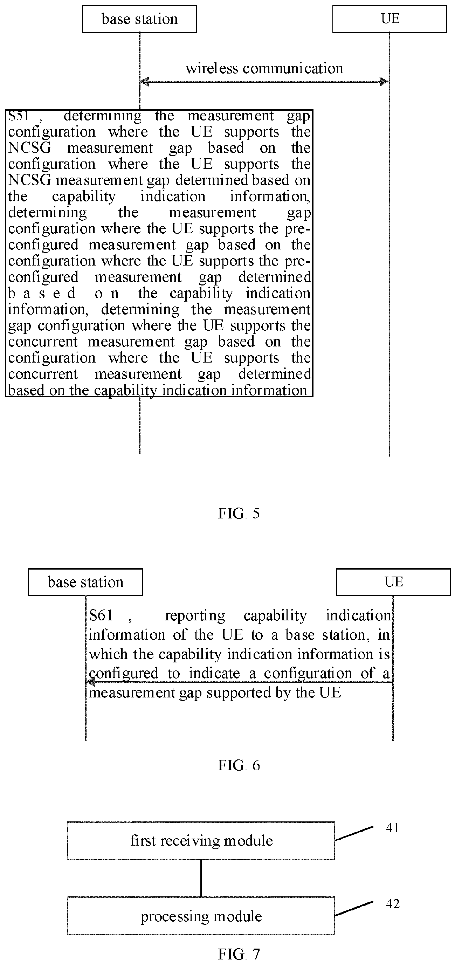

As shown in FIG. 5, an embodiment of the present disclosure provides a method for measurement gap processing. The method is performed by a base station and includes a step as follows.

In step S51, the measurement gap configuration where the UE supports the NCSG measurement gap is determined based on the configuration where the UE supports the NCSG measurement gap determined based on the capability indication information. Alternatively, the measurement gap configuration where the UE supports the pre-configured measurement gap is determined based on the configuration where the UE supports the pre-configured measurement gap determined based on the capability indication information. Alternatively, the measurement gap configuration where the UE supports the concurrent measurement gap is determined based on the configuration where the UE supports the concurrent measurement gap determined based on the capability indication information.

In some embodiments, the above-mentioned step S41 includes one of determining the measurement gap configuration where the UE supports the NCSG measurement gap based on the configuration where the UE supports the NCSG measurement gap determined based on the capability indication information, determining the measurement gap configuration where the UE supports the pre-configured measurement gap based on the configuration where the UE supports the pre-configured measurement gap determined based on the capability indication information, determining the measurement gap configuration where the UE supports the concurrent measurement gap based on the configuration where the UE supports the concurrent measurement gap determined based on the capability indication information.

In an embodiment of the present disclosure, the base station may determine that the type of the measurement gap supported by the UE may be at least one of the NCSG measurement gap, the pre-configured measurement gap and the concurrent measurement gap through the capability indication information, so that the base station may determine the measurement gap configuration where the UE supports at least one of the NCSG measurement gap, the pre-configured measurement gap and the concurrent measurement gap.

In case that the base station determines that the type of the measurement gap supported by the UE is the NCSG measurement gap through the capability indication information, the base station may configure the measurement gap configuration supporting the NCSG measurement gap for the UE. In this way, in the embodiment of the present disclosure, for the use of a short measurement gap, a measurement may be performed, thus shortening the interruption time (i.e., reducing the interruption of a serving cell due to mobility measurement), thus improving the throughput of the serving cell.

In case that the base station determines that the type of the gap supported by the UE is the pre-configured measurement gap through the capability indication information, the base station may configure the measurement gap configuration that supports the pre-configured measurement gap for the UE. In this way, in the embodiment of the present disclosure, when the UE works in different BWPs, different measurement gaps may be may configured. For example, for a UE working at a BWP1, it may be configured to support the measurement gap, and for a UE working at a BWP2, it may be configured not to support the measurement gap. In this way, the configuration of the measurement gap of the UE may be dynamically managed. Thus, the throughput of the network and the UE may also be improved.

In case that the base station determines that the type of the gap supported by the UE is the concurrent measurement gap through the capability indication information, the base station may configure the measurement gap configuration that supports the concurrent measurement gap for the UE. In this way, the embodiment of the present disclosure may configure the concurrent measurement gap for the UE in one frequency range or in multiple frequency ranges. For example, the multiple concurrent measurement gaps are supported in the one frequency range. Therefore, the UE may perform the measurement based on the multiple measurement gaps, the measurement delay is reduced, and the measurement efficiency is improved.

Of course, in other embodiments, the base station may also determine, according to the capability indication information, that the measurement gap configuration where the UE does not support at least one of the NCSG measurement gap, the pre-configured measurement gap and the concurrent measurement gap.

For example, an embodiment of the present disclosure provides a method for measurement gap processing. The method is performed by the base station and may include at least one of the following: it is determined that the UE does not support the measurement gap configuration of the NCSG measurement gap, in response to determining that the capability indication information does not include the NCSG measurement gap capability indication information; it is determined that the UE does not support the measurement gap configuration of the pre-configured measurement gap, in response to determining that the capability indication information does not include the pre-configured measurement gap capability indication information; it is determined that the UE does not support the measurement gap configuration of the concurrent measurement gap, in response to determining that the capability indication information does not include the concurrent measurement gap capability indication information.

For another example, an embodiment of the present disclosure provides a method for measurement gap processing. The method is performed by the base station and may include at least one of determining a measurement gap configuration where the UE does not support the NCSG measurement gap based on a configuration where the UE does not support the NCSG measurement gap determined based on the capability indication information, determining a measurement gap configuration where the UE does not support the pre-configured measurement gap based on a configuration where the UE does not support the pre-configured measurement gap determined based on the capability indication information, determining a measurement gap configuration where the UE does not support the concurrent measurement gap based on a configuration where the UE does not support the concurrent measurement gap determined based on the capability indication information.

In this way, in the embodiment of the present disclosure, it is also possible to determine, based on the capability indication information, the type of the measurement gap that is not supported by the UE, and determine the measurement gap configuration where the UE does not support the type of the measurement gap, thus realizing the accurate configuration of the type of the measurement gap of the UE, etc. The measurement delay or the throughput of the UE may be correspondingly reduced.

An embodiment of the present disclosure provides a method for measurement gap processing. The method is performed by the base station and may include sending the measurement gap configuration to the UE.

An embodiment of the present disclosure provides a method for measurement gap processing. The method is performed by the base station and may include at least one of sending the measurement gap configuration where the UE supports the number of configurations of the measurement gap to the UE, or sending the measurement gap configuration where the UE supports the type of the measurement gap to the UE.

An embodiment of the present disclosure provides a method for measurement gap processing. The method is performed by the base station and may include at least one of sending the measurement gap configuration where the UE supports the NCSG measurement gap to the UE, sending the measurement gap configuration where the UE supports the pre-configured measurement gap to the UE, sending the measurement gap configuration where the UE supports the concurrent measurement gap to the UE.

In the embodiment of the present disclosure, the base station may also send the measurement gap configuration to the UE, so that the UE may perform the measurement based on the measurement gap configuration, which is beneficial to realize dynamic and flexible management of the measurement configuration of the UE, thus enabling the UE to perform the measurement more efficiently.

It is to be noted that those skilled in the art may understand that the methods provided in the embodiments of the present disclosure may be executed alone, or may be executed together with some methods in the embodiments of the present disclosure or some methods in related technologies.

The following method for measurement gap processing is performed by a user equipment (UE), which is similar to the description of the above-mentioned method for measurement gap processing performed by the base station. Moreover, for the technical details not disclosed in the embodiment of the method for measurement gap processing performed by the UE, reference may be made to the description of the example of the method for measurement gap processing performed by the base station, which will not be elaborated herein.

As shown in FIG. 6, an embodiment of the present disclosure provides a method for measurement gap processing. The method is performed by a user equipment (UE) and includes a step as follows.

In step S61, capability indication information of the UE is reported to a base station, in which the capability indication information is configured to indicate a configuration of a measurement gap supported by the UE.

In some embodiments, the capability indication information at least indicates at least one of a number of configurations of the measurement gap indicating a number of configurations of the measurement gap supported by the UE, a type of the configuration of the measurement gap indicating a type of the measurement gap supported by the UE.

In some embodiments, the number of configurations of the measurement gap includes one of a number of configurations of the measurement gap supported by the UE in one frequency range, a number of configurations of the measurement gap supported by the UE in multiple frequency ranges.

In some embodiments, the type of the configuration of the measurement gap includes at least one of the measurement gap supported by the UE being a network control small gap (NCSG) measurement gap, the measurement gap supported by the UE being a pre-configured measurement gap, the measurement gap supported by the UE being a concurrent measurement gap.

An embodiment of the present disclosure provides a method for measurement gap processing. The method is performed by the UE and may include one of reporting a measurement and mobility parameter information unit (IE MeasAndMobParameters) signaling to the base station, in which the IE MeasAndMobParameters signaling carries the capability indication information, reporting a measurement and mobility parameter information unit (IE MeasAndMobParametersMRDC) signaling of multiple wireless system dual connectivities to the base station, in which the IE MeasAndMobParametersMRDC signaling carries the capability indication information.

In some embodiments, the capability indication information includes at least one of NCSG measurement gap capability indication information configured to indicate a configuration where the UE supports the NCSG measurement gap, pre-configured measurement gap capability indication information configured to indicate a configuration where the UE supports the pre-configured measurement gap, concurrent measurement gap capability indication information configured to indicate a configuration where the UE supports the concurrent measurement gap.

In some embodiments, the concurrent measurement gap capability indication information is configured to indicate at least one of a number of configurations of the concurrent measurement gap supported by the UE in one frequency range, a number of configurations of the concurrent measurement gap supported by the UE in each frequency range of multiple frequency ranges.

An embodiment of the present disclosure provides a method for measurement gap processing. The method is performed by the UE and may include receiving a measurement gap configuration sent by the base station, in which the measurement gap configuration is determined based on a configuration where the UE supports the measurement gap determined in the capability indication information.

An embodiment of the present disclosure provides a method for measurement gap processing. The method is performed by the UE and may include at least one of receiving the measurement gap configuration where the UE supports the number of configurations of the measurement gap sent by a base station, receiving the measurement gap configuration where the UE supports the type of the measurement gap sent by the base station.

An embodiment of the present disclosure provides a method for measurement gap processing. The method is performed by the UE and may include at least one of receiving the measurement gap configuration where the UE supports the NCSG measurement gap sent by the base station, receiving the measurement gap configuration where the UE supports the pre-configured measurement gap sent by the base station, receiving the measurement gap configuration where the UE supports the concurrent measurement gap sent by the base station.

It is to be noted that those skilled in the art may understand that the methods provided in the embodiments of the present disclosure may be executed alone, or may be executed together with some methods in the embodiments of the present disclosure or some methods in related technologies.

As shown in FIG. 7, an embodiment of the present disclosure provides an apparatus for measurement gap processing. The apparatus is applied to a base station and includes a first receiving module 41.

The first receiving module 41 is configured to receive capability indication information reported by a user equipment (UE), in which the capability indication information at least indicates a configuration of a measurement gap supported by the UE.

In some embodiments, the capability indication information at least indicates at least one of a number of configurations of the measurement gap indicating a number of configurations of the measurement gap supported by the UE, a type of the configuration of the measurement gap indicating a type of the measurement gap supported by the UE.

In some embodiments, the number of configurations of the measurement gap includes one of a number of configurations of the measurement gap supported by the UE in one frequency range, a number of configurations of the measurement gap supported by the UE in multiple frequency ranges.

In some embodiments, the type of the configuration of the measurement gap includes at least one of the measurement gap supported by the UE being a network control small gap (NCSG) measurement gap, the measurement gap supported by the UE being a pre-configured measurement gap, the measurement gap supported by the UE being a concurrent measurement gap.

An embodiment of the present disclosure provides an apparatus for measurement gap processing. The apparatus is applied to the base station and may include the first receiving module 41.

The first receiving module is configured to receive a measurement and mobility parameter information unit (IE MeasAndMobParameters) signaling reported by the UE, in which the IE MeasAndMobParameters signaling carries the capability indication information, or the first receiving module 41 is configured to receive a measurement and mobility parameter information unit (IE MeasAndMobParametersMRDC) signaling of multiple wireless system dual connectivities reported by the UE, in which the IE MeasAndMobParametersMRDC signaling carries the capability indication information.

In some embodiments, the capability indication information includes at least one of NCSG measurement gap capability indication information configured to indicate a configuration where the UE supports the NCSG measurement gap, pre-configured measurement gap capability indication information configured to indicate a configuration where the UE supports the pre-configured measurement gap, concurrent measurement gap capability indication information configured to indicate a configuration where the UE supports the concurrent measurement gap.

In some embodiments, the concurrent measurement gap capability indication information is configured to indicate at least one of a number of configurations of the concurrent measurement gap supported by the UE in one frequency range, a number of configurations of the concurrent measurement gap supported by the UE in each frequency range of multiple frequency ranges.

An embodiment of the present disclosure provides an apparatus for measurement gap processing. The apparatus is applied to the base station and may include a processing module 42.

The processing module 42 is configured to determine a measurement gap configuration based on a configuration where the UE supports the measurement gap determined based on the capability indication information.

An embodiment of the present disclosure provides an apparatus for measurement gap processing. The apparatus is applied to the base station and may include the processing module 42.

The processing module is configured to perform one of determining the measurement gap configuration where the UE supports the NCSG measurement gap based on the configuration where the UE supports the NCSG measurement gap determined based on the capability indication information, determining the measurement gap configuration where the UE supports the pre-configured measurement gap based on the configuration where the UE supports the pre-configured measurement gap determined based on the capability indication information, determining the measurement gap configuration where the UE supports the concurrent measurement gap based on the configuration where the UE supports the concurrent measurement gap determined based on the capability indication information.

An embodiment of the present disclosure provides an apparatus for measurement gap processing. The apparatus is applied to the base station and may include a first sending module.

The first sending module is configured to send the measurement gap configuration where the UE supports the number of configurations of the measurement gap to the UE, and/or the first sending module is configured to send the measurement gap configuration where the UE supports the type of the measurement gap to the UE.

An embodiment of the present disclosure provides an apparatus for measurement gap processing. The apparatus is applied to the base station and may include the first sending module.

The first sending module is configured to perform one of sending the measurement gap configuration where the UE supports the NCSG measurement gap to the UE, sending the measurement gap configuration where the UE supports the pre-configured measurement gap to the UE, sending the measurement gap configuration where the UE supports the concurrent measurement gap to the UE.

It is to be noted that those skilled in the art may understand that the apparatuses provided in the embodiments of the present disclosure may be executed alone, or may be executed together with some apparatuses in the embodiments of the present disclosure or some apparatuses in related technologies.

Regarding the apparatus in the above-mentioned embodiment, the specific manner in which each module performs operations has been described in detail in the embodiment of the method, which will not be elaborated herein.

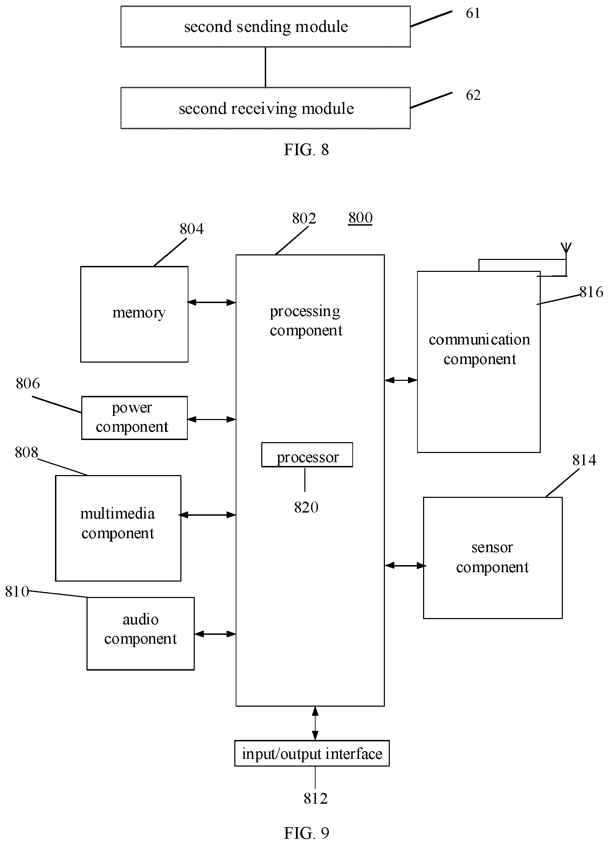

As shown in FIG. 8, an embodiment of the present disclosure provides an apparatus for measurement gap processing. The apparatus is applied to a user equipment (UE) and includes a second sending module 61.

The second sending module 61 is configured to report capability indication information of the UE to a base station, in which the capability indication information is configured to indicate a configuration of a measurement gap supported by the UE.

In some embodiments, the capability indication information indicates at least one of a number of configurations of the measurement gap indicating a number of configurations of the measurement gap supported by the UE, a type of the configuration of the measurement gap indicating a type of the measurement gap supported by the UE.

In some embodiments, the number of configurations of the measurement gap includes one of a number of configurations of the measurement gap supported by the UE in one frequency range, a number of configurations of the measurement gap supported by the UE in multiple frequency ranges.

In some embodiments, the type of the configuration of the measurement gap includes at least one of the measurement gap supported by the UE being a network control small gap (NCSG) measurement gap, the measurement gap supported by the UE being a pre-configured measurement gap, the measurement gap supported by the UE being a concurrent measurement gap.

An embodiment of the present disclosure provides an apparatus for measurement gap processing. The apparatus is applied to the UE and may include the second sending module 61.

The second sending module is configured to report a measurement and mobility parameter information unit (IE MeasAndMobParameters) signaling to the base station, in which the IE MeasAndMobParameters signaling carries the capability indication information, or the second sending module is configured to report a measurement and mobility parameter information unit (IE MeasAndMobParametersMRDC) signaling of multiple wireless system dual connectivities to the base station, in which the IE MeasAndMobParametersMRDC signaling carries the capability indication information.

In some embodiments, the capability indication information includes at least one of NCSG measurement gap capability indication information configured to indicate a configuration where the UE supports the NCSG measurement gap, pre-configured measurement gap capability indication information configured to indicate a configuration where the UE supports the pre-configured measurement gap, concurrent measurement gap capability indication information configured to indicate a configuration where the UE supports the concurrent measurement gap.

In some embodiments, the concurrent measurement gap capability indication information is configured to indicate at least one of a number of configurations of the concurrent measurement gap supported by the UE in one frequency range, a number of configurations of the concurrent measurement gap supported by the UE in each frequency range of multiple frequency ranges.

An embodiment of the present disclosure provides an apparatus for measurement gap processing. The apparatus is applied to the UE and may include a second receiving module 62.

The second receiving module 62 is configured to receive a measurement gap configuration sent by the base station, in which the measurement gap configuration is determined based on a configuration where the UE supports the measurement gap determined in the capability indication information.

An embodiment of the present disclosure provides an apparatus for measurement gap processing. The apparatus is applied to the UE and may include the second receiving module 62.

The second receiving module 62 is configured to receive the measurement gap configuration where the UE supports the number of configurations of the measurement gaps sent by the base station, and/or the second receiving module 62 is configured to receive the measurement gap configuration where the UE supports the type of the measurement gap sent by the base station.

An embodiment of the present disclosure provides an apparatus for measurement gap processing. The apparatus is applied to the UE and may include the second receiving module 62.

The second receiving module 62 is configured to perform at least one of receiving the measurement gap configuration where the UE supports the NCSG measurement gap sent by the base station, receiving the measurement gap configuration where the UE supports the pre-configured measurement gap sent by a base station, receiving the measurement gap configuration where the UE supports the concurrent measurement gap sent by the base station.

It is to be noted that those skilled in the art may understand that the apparatuses provided in the embodiments of the present disclosure may be executed alone, or may be executed together with some apparatuses in the embodiments of the present disclosure or some apparatuses in related technologies.

Regarding the apparatus in the above-mentioned embodiment, the specific manner in which each module performs operations has been described in detail in the embodiment of the method, which will not be elaborated herein.

An embodiment of the present disclosure provides a communication device. The communication device includes a processor, and a memory for storing instructions executable by the processor, in which the processor is configured to implement the method for measurement gap processing of any embodiment of the present disclosure when running the executable instructions.

In an embodiment, the communication device may be a user equipment (UE), or a base station.

The processor may include various types of storage medium, which are non-transitory computer storage medium that may continue to memorize information stored thereon after the UE is powered down.

The processor may be connected to the memory through a bus or the like, for reading the executable program stored on the memory, for example, at least one of the methods shown in FIGS. 2 to 6.

An embodiment of the present disclosure also provides a computer storage medium.

The computer storage medium has stored therein computer executable programs that, when executed by a processor, cause the method for measurement gap processing of any embodiment of the present disclosure, for example, at least one of the methods shown in FIGS. 2 to 6, to be implemented.

Regarding the device or storage medium in the above-mentioned embodiment, the specific manner in which each module performs operations has been described in detail in the embodiment of the method, which will not be elaborated herein.

FIG. 9 is a block diagram showing a user equipment (UE) 800 according to an illustrative embodiment. For example, the UE 800 can be a mobile phone, a computer, a digital broadcast user equipment, a messaging device, a game console, a tablet device, a medical device, a fitness device, a personal digital assistant, or the like.

Referring to FIG. 9, the UE 800 may include one or more components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, phone calls, data communications, camera operations, and recording operations. The processing component 802 can include one or more processors 820 to execute instructions to perform all or some of the steps in the above-described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 808 includes a front camera and/or a rear camera. The front camera and/or the rear camera may receive an external multimedia datum while the user equipment 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the user equipment 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as keyboards, click wheels, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may further include a light sensor, such as a CMOS or CCD image sensor, for use in imaging applications. In some embodiments, the sensor component 814 may further include an accelerometer sensor, a gyroscope sensor, a magnetic sensor, a pressure sensor, or a temperature sensor.

The communication component 816 is configured to facilitate communication, wired or wireless, between the UE 800 and other devices. The UE 800 can access a wireless network based on a communication standard, such as WiFi, 2G, or 3G, or a combination thereof. In an illustrative embodiment, the communication component 816 receives a broadcast signal or broadcast associated information from an external broadcast management system via a broadcast channel. In an illustrative embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the UE 800 may be implemented with one or more application specific integrated circuits (ASICs), a digital signal processor (DSP), a digital signal processing device (DSPD), a programmable logic device (PLD), a field programmable gate array (FPGA), a controller, a micro-controller, a microprocessor, or other electronic elements, for performing the above-mentioned methods.

In an illustrative embodiment, there is also provided a non-transitory computer readable storage medium including instructions, such as included in the memory 804, executable by the processor 820 in the UE 800, for completing any one of the above-mentioned methods. For example, the non-transitory computer-readable storage medium may be a ROM, a random access memory (RAM), a CD-ROM, a magnetic tape, a floppy disc, an optical data storage device, and the like.

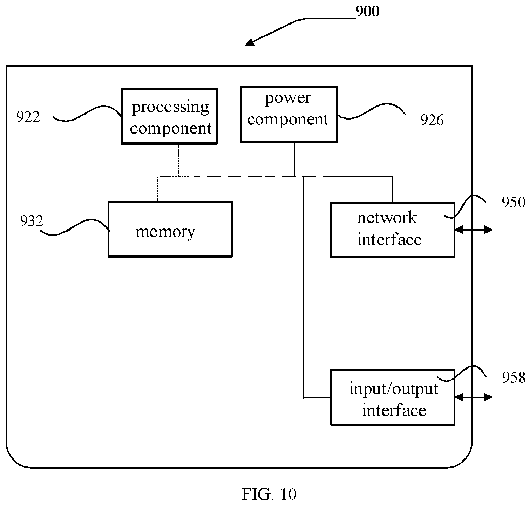

As shown in FIG. 10, an embodiment of the present disclosure shows a structure of a base station. For example, the base station 900 may be provided as a network side device. Referring to FIG. 10, the base station 900 includes a processing component 922, which further includes one or more processors, and memory resources represented by a memory 932 for storing instructions executable by the processing component 922, such as an application program. The application program stored in the memory 932 may include one or more modules each corresponding to a set of instructions. In addition, the processing component 922 is configured to execute instructions to perform any of the above-mentioned methods performed by the base station.

The base station 900 may further include a power component 926 configured to perform power management of the base station 900, a wired or wireless network interface 950 configured to connect the base station 900 to a network, and an input/output (I/O) interface 958. The base station 900 may operate based on an operating system stored in the memory 932, such as Windows Server TM, Mac OS XTM, UnixTM, LinuxTM, FreeBSDTM, or the like.

Other embodiments of the disclosure will be apparent to those skilled in the art from consideration of the specification and practice of the disclosure disclosed here. The present disclosure is intended to cover any variations, uses, or adaptations of the disclosure following the general principles thereof and including such departures from the present disclosure as come within known or customary practice in the art. It is intended that the specification and examples be considered as illustrative only, with a true scope and spirit of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for measurement gap processing, performed by a base station, comprising:
receiving capability indication information reported by a user equipment (UE), wherein the capability indication information at least indicates a configuration of a measurement gap supported by the UE.

2. The method of claim 1, wherein the capability indication information at least indicates at least one of:
a number of configurations of the measurement gap indicating a number of configurations of the measurement gap supported by the UE;
a type of the configuration of the measurement gap indicating a type of the measurement gap supported by the UE.

3. The method of claim 2, wherein the number of configurations of the measurement gap comprises one of:
a number of configurations of the measurement gap supported by the UE in one frequency range;
a number of configurations of the measurement gap supported by the UE in multiple frequency ranges.

4. The method of claim 2, wherein the type of the configuration of the measurement gap comprises at least one of:
the measurement gap supported by the UE being a network control small gap (NCSG) measurement gap;
the measurement gap supported by the UE being a pre-configured measurement gap;
the measurement gap supported by the UE being a concurrent measurement gap.

5. The method of any one of claims 1 to 4, wherein receiving the capability indication information reported by the UE comprises one of:
receiving a measurement and mobility parameter information unit (IE MeasAndMobParameters) signaling reported by the UE, wherein the IE MeasAndMobParameters signaling carries the capability indication information;
receiving a measurement and mobility parameter information unit (IE MeasAndMobParametersMRDC) signaling of multiple wireless system dual connectivities reported by the UE, wherein the IE MeasAndMobParametersMRDC signaling carries the capability indication information.

6. The method of claim 5, wherein the capability indication information comprises at least one of:
NCSG measurement gap capability indication information configured to indicate a configuration where the UE supports the NCSG measurement gap;
pre-configured measurement gap capability indication information configured to indicate a configuration where the UE supports the pre-configured measurement gap;
concurrent measurement gap capability indication information configured to indicate a configuration where the UE supports the concurrent measurement gap.

7. The method of claim 6, wherein the concurrent measurement gap capability indication information is configured to indicate at least one of:
a number of configurations of the concurrent measurement gap supported by the UE in one frequency range;
a number of configurations of the concurrent measurement gap supported by the UE in each frequency range of multiple frequency ranges.

8. The method of any one of claims 1 to 7, further comprising:
determining a measurement gap configuration based on a configuration where the UE supports the measurement gap determined based on the capability indication information.

9. The method of claim 8, wherein determining the measurement gap configuration based on the configuration where the UE supports the measurement gap determined based on the capability indication information comprises one of:
determining the measurement gap configuration where the UE supports the NCSG measurement gap based on the configuration where the UE supports the NCSG measurement gap determined based on the capability indication information;
determining the measurement gap configuration where the UE supports the pre-configured measurement gap based on the configuration where the UE supports the pre-configured measurement gap determined based on the capability indication information;
determining the measurement gap configuration where the UE supports the concurrent measurement gap based on the configuration where the UE supports the concurrent measurement gap determined based on the capability indication information.

10. A method for measurement gap processing, performed by a user equipment (UE), comprising:
reporting capability indication information of the UE to a base station, wherein the capability indication information is configured to indicate a configuration of a measurement gap supported by the UE.

11. The method of claim 10, wherein the capability indication information indicates at least one of:
a number of configurations of the measurement gap indicating a number of configurations of the measurement gap supported by the UE;
a type of the configuration of the measurement gap indicating a type of the measurement gap supported by the UE.

12. The method of claim 11, wherein the number of configurations of the measurement gap comprises one of:
a number of configurations of the measurement gap supported by the UE in one frequency range;
a number of configurations of the measurement gap supported by the UE in multiple frequency ranges.

13. The method of claim 11, wherein the type of the configuration of the measurement gap comprises at least one of:
the measurement gap supported by the UE being a network control small gap (NCSG) measurement gap;
the measurement gap supported by the UE being a pre-configured measurement gap;
the measurement gap supported by the UE being a concurrent measurement gap.

14. The method of any one of claims 10 to 13, wherein reporting the capability indication information of the UE to the base station comprises one of:
reporting a measurement and mobility parameter information unit (IE MeasAndMobParameters) signaling to the base station, wherein the IE MeasAndMobParameters signaling carries the capability indication information;
reporting a measurement and mobility parameter information unit (IE MeasAndMobParametersMRDC) signaling of multiple wireless system dual connectivities to the base station, wherein the IE MeasAndMobParametersMRDC signaling carries the capability indication information.

15. The method of claim 14, wherein the capability indication information comprises at least one of:
NCSG measurement gap capability indication information configured to indicate a configuration where the UE supports the NCSG measurement gap;
pre-configured measurement gap capability indication information configured to indicate a configuration where the UE supports the pre-configured measurement gap;
concurrent measurement gap capability indication information configured to indicate a configuration where the UE supports the concurrent measurement gap.

16. The method of claim 15, wherein the concurrent measurement gap capability indication information is configured to indicate at least one of:
a number of configurations of the concurrent measurement gap supported by the UE in one frequency range;
a number of configurations of the concurrent measurement gap supported by the UE in each frequency range of multiple frequency ranges.

17. The method of any one of claims 10 to 16, further comprising:
receiving a measurement gap configuration sent by the base station, wherein the measurement gap configuration is determined based on a configuration where the UE supports the measurement gap determined in the capability indication information.

18. An apparatus for measurement gap processing, applied to a base station, comprising:
a first receiving module configured to receive capability indication information reported by a user equipment (UE), wherein the capability indication information at least indicates a configuration of a measurement gap supported by the UE.

19. The apparatus of claim 18, wherein the capability indication information at least indicates at least one of:
a number of configurations of the measurement gap indicating a number of configurations of the measurement gap supported by the UE;
a type of the configuration of the measurement gap indicating a type of the measurement gap supported by the UE.

20. The apparatus of claim 19, wherein the number of configurations of the measurement gap comprises one of:
a number of configurations of the measurement gap supported by the UE in one frequency range;
a number of configurations of the measurement gap supported by the UE in multiple frequency ranges.

21. The apparatus of claim 19, wherein the type of the configuration of the measurement gap comprises at least one of:
the measurement gap supported by the UE being a network control small gap (NCSG) measurement gap;
the measurement gap supported by the UE being a pre-configured measurement gap;
the measurement gap supported by the UE being a concurrent measurement gap.

22. The apparatus of any one of claims 18 to 21, wherein
the first receiving module is configured to receive a measurement and mobility parameter information unit (IE MeasAndMobParameters) signaling reported by the UE, wherein the IE MeasAndMobParameters signaling carries the capability indication information; or
the first receiving module is configured to receive a measurement and mobility parameter information unit (IE MeasAndMobParametersMRDC) signaling of multiple wireless system dual connectivities reported by the UE, wherein the IE MeasAndMobParametersMRDC signaling carries the capability indication information.

23. The apparatus of claim 22, wherein the capability indication information comprises at least one of:
NCSG measurement gap capability indication information configured to indicate a configuration where the UE supports the NCSG measurement gap;
pre-configured measurement gap capability indication information configured to indicate a configuration where the UE supports the pre-configured measurement gap;
concurrent measurement gap capability indication information configured to indicate a configuration where the UE supports the concurrent measurement gap.

24. The apparatus of claim 23, wherein the concurrent measurement gap capability indication information is configured to indicate at least one of:
a number of configurations of the concurrent measurement gap supported by the UE in one frequency range;
a number of configurations of the concurrent measurement gap supported by the UE in each frequency range of multiple frequency ranges.

25. The apparatus of any one of claims 18 to 24, further comprising:
a processing module configured to determine a measurement gap configuration based on a configuration where the UE supports the measurement gap determined based on the capability indication information.

26. The apparatus of claim 25, wherein the processing module is configured to perform one of:
determining the measurement gap configuration where the UE supports the NCSG measurement gap based on the configuration where the UE supports the NCSG measurement gap determined based on the capability indication information;
determining the measurement gap configuration where the UE supports the pre-configured measurement gap based on the configuration where the UE supports the pre-configured measurement gap determined based on the capability indication information;
determining the measurement gap configuration where the UE supports the concurrent measurement gap based on the configuration where the UE supports the concurrent measurement gap determined based on the capability indication information.

27. An apparatus for measurement gap processing, applied to a user equipment (UE), comprising:
a second sending module configured to report capability indication information of the UE to a base station, wherein the capability indication information is configured to indicate a configuration of a measurement gap supported by the UE.

28. The apparatus of claim 27, wherein the capability indication information indicates at least one of:
a number of configurations of the measurement gap indicating a number of configurations of the measurement gap supported by the UE;
a type of the configuration of the measurement gap indicating a type of the measurement gap supported by the UE.

29. The apparatus of claim 28, wherein the number of configurations of the measurement gap comprises one of:
a number of configurations of the measurement gap supported by the UE in one frequency range;
a number of configurations of the measurement gap supported by the UE in multiple frequency ranges.

30. The apparatus of claim 28, wherein the type of the configuration of the measurement gap comprises at least one of:
the measurement gap supported by the UE being a network control small gap (NCSG) measurement gap;
the measurement gap supported by the UE being a pre-configured measurement gap;
the measurement gap supported by the UE being a concurrent measurement gap.

31. The apparatus of any one of claims 27 to 31, wherein
the second sending module is configured to report a measurement and mobility parameter information unit (IE MeasAndMobParameters) signaling to the base station, wherein the IE MeasAndMobParameters signaling carries the capability indication information; or
the second sending module is configured to report a measurement and mobility parameter information unit (IE MeasAndMobParametersMRDC) signaling of multiple wireless system dual connectivities to the base station, wherein the IE MeasAndMobParametersMRDC signaling carries the capability indication information.

32. The apparatus of claim 14, wherein the capability indication information comprises at least one of:
NCSG measurement gap capability indication information configured to indicate a configuration where the UE supports the NCSG measurement gap;
pre-configured measurement gap capability indication information configured to indicate a configuration where the UE supports the pre-configured measurement gap;
concurrent measurement gap capability indication information configured to indicate a configuration where the UE supports the concurrent measurement gap.

33. The apparatus of claim 32, wherein the concurrent measurement gap capability indication information is configured to indicate at least one of:
a number of configurations of the concurrent measurement gap supported by the UE in one frequency range;
a number of configurations of the concurrent measurement gap supported by the UE in each frequency range of multiple frequency ranges.

34. The apparatus of any one of claims 10 to 16, further comprising:
a second receiving module configured to receive a measurement gap configuration sent by the base station, wherein the measurement gap configuration is determined based on a configuration where the UE supports the measurement gap determined in the capability indication information.

35. A communication device, comprising:
a processor; and
a memory for storing instructions executable by the processor;
wherein the processor is configured to implement the method for measurement gap processing of any one of claims 1 to 9, or of any one of claims 10 to 17 when running the executable instructions.

36. A computer storage medium having stored therein computer executable programs that, when executed by a processor, cause the method for measurement gap processing of any one of claims 1 to 9, or of any one of claims 10 to 17 to be implemented.
